# EUROPEAN PATENT APPLICATION

(11) **EP 3 699 864 A1**
(43) Date of publication of application: **26.08.2020**
(21) Application number: 18868723.0
(22) Date of filing: 09.08.2018
(51) Int. Cl.: G06T 7/00

(54) **ONLINE RECOGNITION DEVICE, ONLINE RECOGNITION METHOD, AND SETTING SCREEN FOR USE IN SAME**

(30) Priority: 17.10.2017 JP 2017200825
(71) Applicant: Hitachi, Ltd., Tokyo 100-8280 (JP)
(72) Inventor: KONG Quan, Tokyo 100-8280 (JP); WATANABE Yuki, Tokyo 100-8280 (JP); AKIRA Naoto, Tokyo 100-8280 (JP); MURAKAMI Tomokazu, Tokyo 100-8280 (JP)
(74) Representative: Strehl Schübel-Hopf & Partner
(86) International application number: PCT/JP2018/029882
(87) International publication number: WO 2019/077854

(57) **Abstract**

An object of the invention is to provide an online recognition apparatus, an online recognition method, and a setting screen used for the same, which can improve recognition accuracy even when learning samples are insufficient. To achieve the above object, the invention provides an online recognition apparatus includes a feature amount extraction unit that extracts a feature amount of input data, an identification result prediction unit that predicts an identification result based on the extracted feature amount, a prediction result evaluation unit that determines necessity of labeling from the predicted identification result unit, a correct answer assigning unit that assigns a correct answer to input data online from the determination result, a generator update unit that updates a parameter of a generator based on the input data with the correct answer, a pseudo-learning data generation unit that establishes a generator based on the parameter of the updated generator and generates pseudo-learning data, and an identifier update unit that online updates a parameter of an identifier prepared in advance based on the input data with the correct answer and the pseudo-learning data. The updated identifier is updated as a new identification result prediction unit.

## Description

### Technical Field

The present invention relates to a technology for recognizing and learning a target such as an object and a person.

### Background Art

In the object recognition/learning technology, there are being studied a number of methods for generating a pseudo sample when learning samples for recognizing the object are insufficient. For example, there is a conversion method in which information that cannot be observed from learning input data to which a label is attached is artificially generated, as disclosed in PTL 1. In addition, there is being studied a method of extracting components and patterns forming data from the learning data and adding the number of samples by synthesizing the pseudo data, or a method of generating data from other domain input data (for example, characters) in a case where the actual learning real data (for example, voice) does not exist.

On the other hand, as disclosed in PTL 2, a method of covering an insufficient learning sample by updating a learning model online while adding a learning sample is being studied.

### Citation List

### Patent Literature

PTL 1: JP 2016-186515 A
PTL 2: JP 2008-204102 A

### Summary of Invention

### Technical Problem

In order to improve the recognition accuracy when the number of learning samples is insufficient, information is generated in a pseudo manner with respect to the input learning data in PTL 1, so that only generated information for the input data can be used. In addition, in the method of adding the number of samples by extracting the components and patterns forming the data from the learning data and synthesizing the pseudo data, the components and patterns forming the data are extracted and the pseudo data is synthesized. Therefore, it is difficult to synthesize an abstract pattern in a complex data structure into a data sample that is close to real. In addition, in PTL 1, the number of samples and information is simply increased. Therefore, the generated samples and information do not always contribute to learning. For a recognition model, learning on a sample that is difficult to recognize or a sample with high uncertainty in recognition greatly contributes to improvement of the recognition performance of the model. In addition, in a case where the generated sample is similar to the existing learning information, there is a possibility that the contribution to the learning is small or not. Therefore, increasing the number of samples by a simple generation process has a problem that efficient and effective learning cannot be performed. Similarly, PTL 2 also has the above-described problem because a newly acquired learning sample is uniformly learned for an additional learning sample when a model is updated online.

### Solution to Problem

The invention has been made in view of the above background art and problems, and an example thereof is an online recognition apparatus which includes a feature amount extraction unit that extracts a feature amount of input data, an identification result prediction unit that predicts an identification result based on the extracted feature amount, a prediction result evaluation unit that determines necessity of labeling from the predicted identification result unit, a correct answer assigning unit that assigns a correct answer to input data online from the determination result, a generator update unit that updates a parameter of a generator based on the input data with the correct answer, a pseudo-learning data generation unit that establishes a generator based on the parameter of the updated generator and generates pseudo-learning data, and an identifier update unit that online updates a parameter of an identifier prepared in advance based on the input data with the correct answer and the pseudo-learning data. The updated identifier is updated as a new identification result prediction unit.

### Advantageous Effects of Invention

According to the invention, it is possible to provide an online recognition apparatus, an online recognition method, and a setting screen used for the same, which can improve recognition accuracy even when learning samples are insufficient.

### Brief Description of Drawings

[FIG. 1] FIG. 1 is a functional block configuration diagram of an online recognition apparatus according to a first embodiment.
[FIG. 2] FIG. 2 is a functional block diagram illustrating a configuration example of a prediction result evaluation unit according to the first embodiment.
[FIG. 3] FIG. 3 is a conceptual diagram illustrating a processing method of a correct answer assigning unit according to the first embodiment.
[FIG. 4] FIG. 4 is a processing flowchart of the online recognition apparatus according to the first embodiment.
[FIG. 5] FIG. 5 is a functional block configuration diagram of an initialization method of a generator/identifier in the first embodiment.
[FIG. 6] FIG. 6 is a functional block diagram illustrating a configuration example of a generator construction unit according to the first embodiment.
[FIG. 7] FIG. 7 is a processing flowchart of an initialization method of the generator/identifier according to the first embodiment.
[FIG. 8] FIG. 8 is a diagram illustrating a hardware configuration example of the online recognition apparatus according to the first embodiment and processing contents thereof.
[FIG. 9] FIG. 9 is a functional block configuration diagram of the online recognition apparatus according to a second embodiment.
[FIG. 10] FIG. 10 is a functional block configuration diagram of the online recognition apparatus according to a third embodiment.
[FIG. 11] FIG. 11 is a pseudo-learning data generation setting GUI of the online recognition apparatus according to the third embodiment.

### Description of Embodiments

Hereinafter, embodiments of the invention will be described using the drawings.

### [First Embodiment]

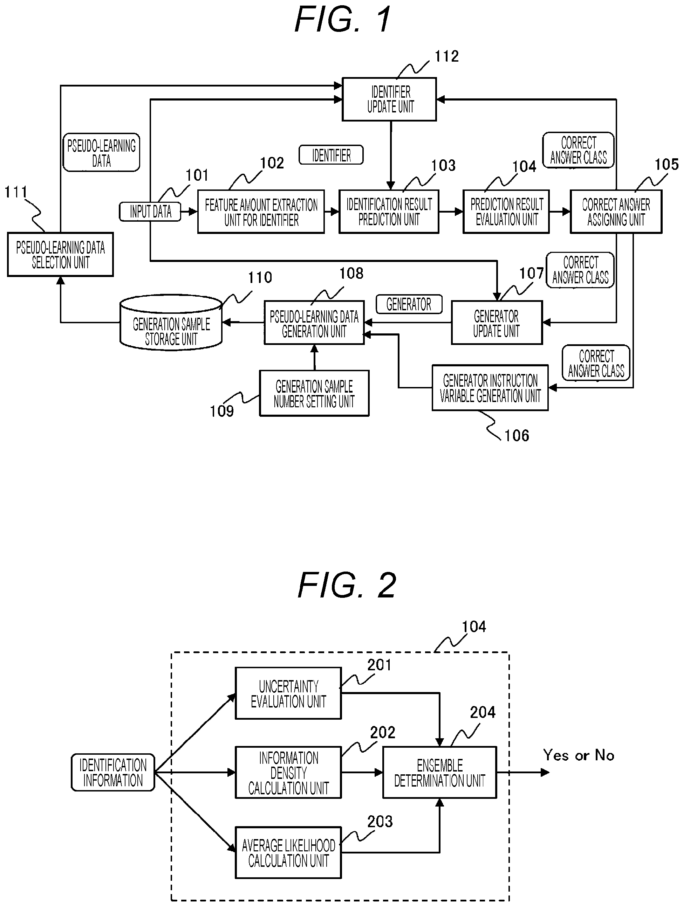

FIG. 1 illustrates a functional block configuration diagram of an online recognition apparatus in this embodiment. In FIG. 1, the online recognition apparatus includes an identifier feature amount extraction unit 102, an identification result prediction unit 103, a prediction result evaluation unit 104, a correct answer assigning unit 105, a generator instruction variable generation unit 106, a generator update unit 107, a pseudo-learning data generation unit 108, a generation sample number setting unit 109, a generation sample storage unit 110, a pseudo-learning data selection unit 111, and an identifier update unit 112.

As input data 101, image data obtained from input units such as a visible camera, a stereo camera, an IR camera, and a radiation (X-ray) irradiation device may be used. The identifier may be configured using a support vector machine (SVM), a neural network, or the like. The generator may be configured using a hidden Markov model (HMM), a neural network, or the like. The pseudo-learning data is data belonging to the same domain as the input data.

The identifier feature amount extraction unit 102 extracts an identifier feature amount from the received input data. The identifier feature amount is extracted by the identifier feature amount extraction unit 102, and is extracted as information capable of identifying the content of the target data.

The identification result prediction unit 103 identifies the content of an object based on the identifier feature amount received from the identifier feature amount extraction unit 102. The identification information is output using the identification result as a vector. The output identification information includes an identification label to be identified (hereinafter, class information), a probability indicating the degree of belonging of the class information to which the object belongs, entropy (a measure of uncertainty), and the like.

The prediction result evaluation unit 104 calculates the identification uncertainty of the input data based on the identification information received from the identification result prediction unit 103, and comprehensively evaluates whether the input data should be added as a learning sample based on the result. The input data satisfying the condition to be added as a learning sample is labeled with a correct answer class by the correct answer assigning unit 105.

The generator instruction variable generation unit 106 converts the class information received from the correct answer assigning unit 105 into an instruction variable. The converted variables include one hot vector. The generator update unit 107 updates the parameters of the generator using the assigned correct answer and the corresponding input data. The pseudo-learning data generation unit 108 generates samples of pseudo-learning data having the class information output from the correct answer assigning unit 105 as many as the number set from the generation sample number setting unit 109 based on the generator received from the generator update unit 107 and the instruction variable received from the generator instruction variable generation unit 106, and stores likelihood information between the pseudo-learning data generation sample and the real sample in the generation sample storage unit 110.

The pseudo-learning data selection unit 111 selects samples whose likelihood of the generated samples accumulated in the generation sample storage unit 110 is up to the ranking k, and outputs a list of selected samples. k is manually input by the user, but a method of estimating from past data may be used. The identifier update unit 112 updates the parameters of the identifier using the pseudo-learning data received from the pseudo-learning data selection unit 111 and the input data to which the correct answer class has been assigned, and outputs the updated parameters to the identification result prediction unit 103.

FIG. 2 is a functional block diagram illustrating a configuration example of the prediction result evaluation unit 104. In FIG. 2, an uncertainty evaluation unit 201 calculates the uncertainty in recognition of the identification information received from the identification result prediction unit 103. An evaluation condition is calculated from the uncertainty. For example, as the evaluation condition, the probability of the class most likely to be estimated is only 0.5 at the highest, and the class most likely to be estimated and the class likely to be estimated second are close to each other, and a large entropy are exemplified. A sample satisfying the evaluation condition becomes a labeling candidate sample, and is evaluates again by an ensemble evaluation unit 204.

An information density calculation unit 202 calculates the similarity with the learning sample, and outputs the average as information density information. An average likelihood calculation unit 203 calculates a distance from the received identification information to the predicted distribution of a recognizer, and outputs the value of the distance as an average likelihood.

In a case where the identification information satisfies the conditions set by the uncertainty evaluation unit 201, the ensemble evaluation unit 204 performs the evaluation again based on the information density received from the information density calculation unit 202 and the average likelihood received from the average likelihood calculation unit 203, and determines whether the input data having the finally input identification information should be assigned a correct answer, for example, by comparing with a prepared threshold.

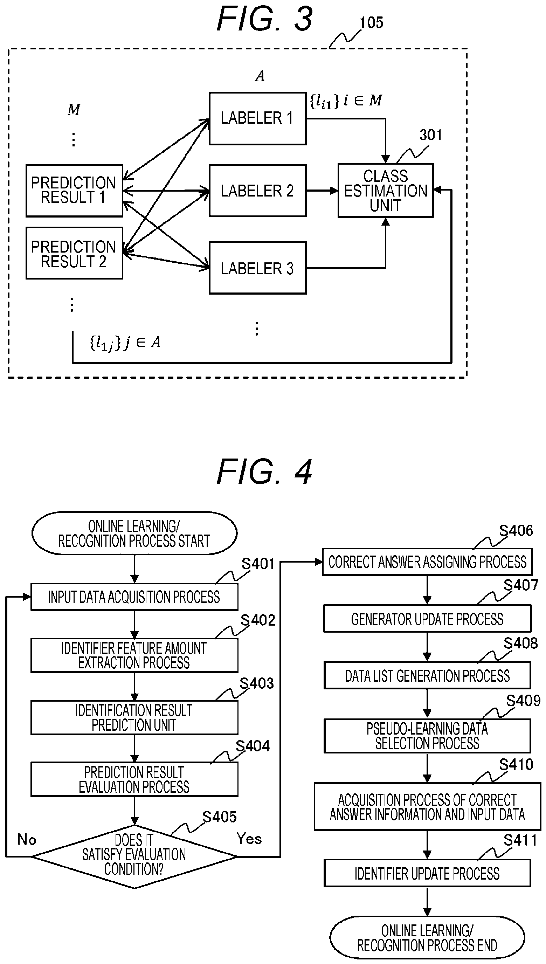

FIG. 3 is a conceptual diagram illustrating a processing method of the correct answer assigning unit 105. In FIG. 3, the correct answer assigning unit 105 performs crowdsourcing. A indicates a labeler group. The labelers work to assign correct answer classes and correct answer areas online in parallel. The labelers can be automation tools or real people. M indicates a group of prediction results having an estimated class from the identification result prediction unit 103. A labeler j assigns lij correct answer information to a prediction result i. The correct answer information is a vector including the correct answer class, the correct answer area, the reliability of the labeler j, and the reliability of the prediction result i. A class estimation unit 301 becomes an evaluation function that comprehensively evaluates lij, and finally outputs optimal class information and a correct answer area to be answered correctly.

FIG. 4 is a processing flowchart of the online recognition apparatus in this embodiment. Hereinafter, the description will be given with reference to the functional block configuration diagram of FIG. 1. In FIG. 4, first, in Step S401, input data acquisition processing is performed. Then, in Step S402, the identifier feature amount is extracted by the identifier feature amount extraction unit 102, and in Step S403, the content of the object is identified by the identification result prediction unit 103 based on the identifier feature amount. Then, in Step S404, the prediction result evaluation unit 104 performs an evaluation process of the prediction result. In Step S405, it is determined whether an evaluation condition to be added as a learning sample is satisfied. If the evaluation condition is satisfied, in Step S406, a correct answer assigning process for assigning a correct answer class label to the input data is performed by the correct answer assigning unit 105. If the evaluation condition is not satisfied, the process returns to Step S401.

Next, in Step S407, a generator update process for updating the parameters of the generator is performed using the correct answer assigned by the generator update unit 107 and the input data corresponding thereto. Then, in Step S408, as a data list generation process, an instruction variable is generated by the generator instruction variable generation unit 106, and the pseudo-learning data generation unit 108 generates samples of pseudo-learning data having the class information output from the correct answer assigning unit 105 as many as the number set from the generation sample number setting unit 109 based on the generator received from the generator update unit 107 and the instruction variable, stores likelihood information between the pseudo-learning data generation sample and the real sample in the generation sample storage unit 110, and makes a list.

Next, in Step S409, a pseudo-learning data selection process is performed to select a sample whose likelihood of the generated sample accumulated in the generation sample storage unit 110 by the pseudo-learning data selection unit 111 is up to the ranking k. In Step S410, the correct answer information and the input data assigned with the correct answer class are acquired. In Step S411, an identifier update process is performed to update the parameters of the identifier using the pseudo-learning data received from the pseudo-learning data selection unit 111 and the input data assigned with the correct answer class. The above is the processing for one input data, and this processing is repeated as long as there is input data.

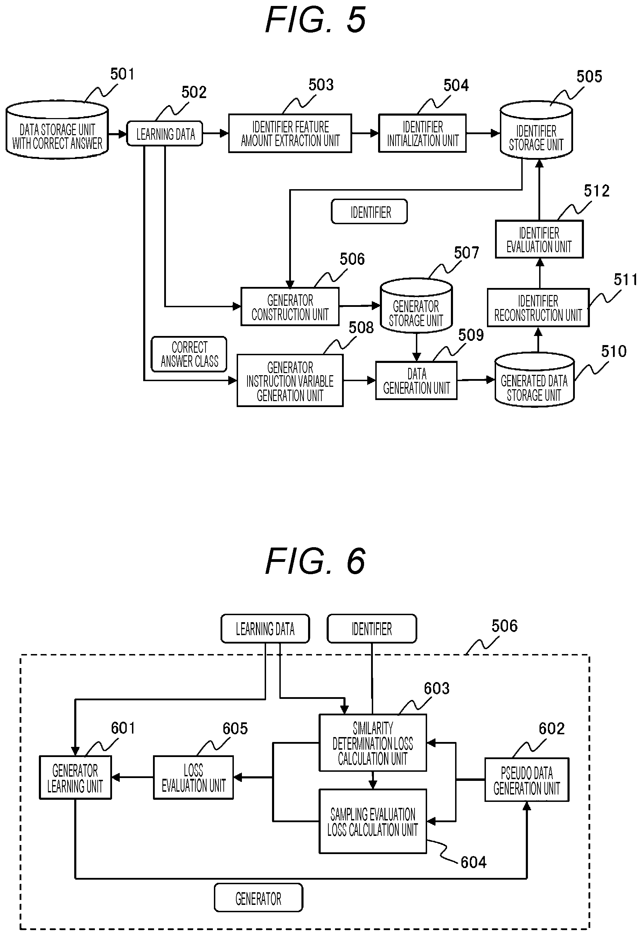

FIG. 5 is a functional block diagram illustrating a method for initializing the generator/identifier. In FIG. 5, first, learning data 502 is assigned from the data storage unit 501 with a correct answer. An identifier feature amount extraction unit 503 extracts an identifier feature amount from the learning data. An identifier initialization unit 504 learns and initializes the parameters of the identifier using the identifier feature amount from the identifier feature amount extraction unit 503. Then, the initialized identifier is stored in the identifier storage unit 505. A generator construction unit 506 learns the parameters of the generator using the learning data and the identifier received from the identifier storage unit 505, and initializes the generator. Then, the initialized generator is stored in a generator storage unit 507.

A generator instruction variable generation unit 508 generates an instruction variable having a vector structure based on the correct answer class assigned to the learning data. A data generation unit 509 generates pseudo data having the same class as the learning data up to a predetermined target number of generation samples based on the generator received from the generator instruction variable generation unit 508 and the generator storage unit 507, and stores the data in the generated data storage unit 510.

An identifier reconstruction unit 511 updates the parameters of the identifier based on the generated data with the correct answer class from the stored generated data storage unit 510, and reconstructs the identifier. An identifier evaluation unit 512 evaluates the performance of the identifier updated from the identifier reconstruction unit 511, and in a case where the difference from the identifier performance stored in the identifier storage unit 505 is larger than a threshold, the identifier is updated to one with high performance by the replacement to the identifier in the identifier storage unit.

FIG. 6 is a functional block diagram illustrating a configuration example of the generator construction unit 506. This is a configuration in which the generator generates data having high identification uncertainty and difficult identification. In FIG. 6, a generator learning unit 601 initializes parameters of the generator based on learning data. A pseudo-data generation unit 602 generates pseudo data using the initialized generator. A similarity determination loss calculation unit 603 classifies the input pseudo data with the pseudo data and the real data using an identifier, and outputs the classification accuracy as a similarity loss value with respect to the real data. A sampling evaluation loss calculation unit 604 calculates the identification uncertainty for the pseudo data based on the identification information calculated under the identifier, and outputs the uncertainty as an evaluation loss value. A loss evaluation unit 605 calculates the sum of the similarity loss value and the evaluation loss value, and feeds it back to the generator learning unit 601. The generator updates the parameters of the generator so as to minimize the loss information received from the loss evaluation unit 605. An update method for minimizing is, for example, a least squares method.

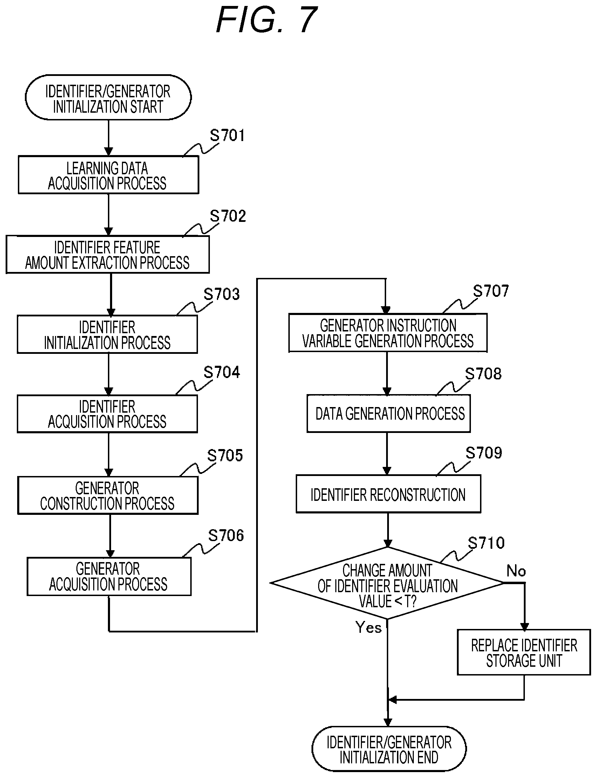

FIG. 7 is a processing flowchart of the generator/identifier initializing method in this embodiment. Hereinafter, the description will be given with reference to the functional block configuration diagram of FIG. 5. In FIG. 7, first, in Step S701, a learning data acquisition process for acquiring the learning data 502 from the data storage unit 501 with a correct answer is performed. Next, in Step S702, the identifier feature amount extraction unit 503 executes an identifier feature amount extraction process of extracting an identifier feature amount from the learning data. Then, in Step S703, the identifier initialization unit 504 performs an identifier initialization process of learning and initializing the parameters of the identifier using the identifier feature amount. Then, in Step S704, an identifier acquisition process of storing the initialized identifier in the identifier storage unit 505 is performed.

Next, in Step S705, the generator construction unit 506 learns the parameters of the generator using the learning data and the identifier received from the identifier storage unit 505, and performs a generator construction process of initializing the generator. Then, in Step S706, an identifier acquisition process of storing the initialized generator in the generator storage unit 507 is performed.

Next, in Step S707, the generator instruction variable generation unit 508 performs a generation instruction variable generation process of generating an instruction variable having a vector structure based on the correct answer class assigned to the learning data. Then, in Step S708, the data generation unit 509 performs a data generation process in which pseudo data having the same class as the learning data is generated up to a predetermined number of generation samples based on the received generator, and the pseudo data is stored in the generated data storage unit 510.

Next, in Step S709, the identifier reconstruction unit 511 performs an identifier reconstruction process in which the parameters of the identifier is updated based on the generated data with the correct answer class from the stored generated data storage unit 510, and the identifier is reconstructed. Then, in Step S710, the identifier evaluation unit 512 evaluates the performance of the identifier updated from the identifier reconstruction unit 511, and in a case where the difference from the identifier performance stored in the identifier storage unit 505 is larger than the threshold, replaces the updated identifier with an identifier stored in the identifier storage unit.

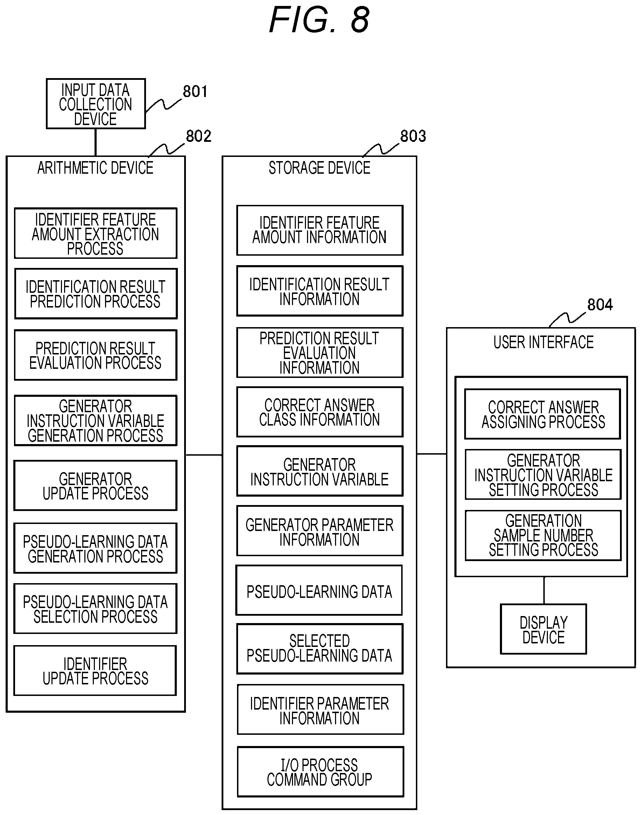

FIG. 8 is a diagram illustrating an example of a hardware configuration of the online recognition apparatus according to this embodiment and the processing content thereof. In FIG. 8, the online recognition apparatus includes an input data collection device 801, an arithmetic device 802, a recording device 803, and a user interface 804. Further, the user interface 804 is configured by a display device and an input device. The arithmetic device 802 calls and writes necessary information from an I/O processing instruction group stored in the recording device 803.

The identifier feature amount extraction process, the identification result prediction process, the prediction result evaluation process, the generation instruction variable generation process, the generator update process, the pseudo-learning data generation process, the pseudo-learning data selection process, and the identifier update process of the arithmetic device 802 include respectively the processes corresponding to the identifier feature amount extraction unit 102, the identification result prediction unit 103, the prediction result evaluation unit 104, the generator instruction variable generation unit 106, the generator update unit 107, the pseudo-learning data generation unit 108, the pseudo-learning data selection unit 111, and the identifier update unit 112 of FIG. 1.

In addition, the correct answer assigning process, the generation instruction variable setting process, and the generation sample number setting process of the user interface 804 perform respectively the processes corresponding to the correct answer assigning unit 105, the generator instruction variable generation unit 106, and the generation sample number setting unit 109 of FIG. 1.

The generation instruction variable setting process is a process in a case where the attributes of a generated sample are adjusted manually in order for the generator to generate a pseudo sample. From the prediction result evaluation process in the arithmetic device 802, the necessity of having a correct answer is determined based on the prediction result evaluation information stored in the recording device 803, and if necessary, the correct answer assigning process in the user interface 804 is performed. The correct answer information is stored in the recording device 803 as correct answer class information. In addition, information set in the generation instruction variable setting process and the generation sample number setting process is stored as a generation instruction variable of the recording device 803. The pseudo-learning data generation process is called, and pseudo-learning data is generated and stored in the recording device 803.

In the pseudo-learning data selection process, data having a high likelihood (reality of data) with real samples is selected manually or automatically from the pseudo-learning data, and the selected pseudo-learning data is stored in the recording device 803. The identifier update process calls the selected pseudo-learning data, learns the parameters of the identifier, and stores the parameters in the recording device 803 as identifier parameter information.

As described above, in this embodiment, the generator that generates a learning sample is configured so that the recognizer generates a sample with high difficulty or uncertainty in recognition, or generates data of a pattern that is not included in the learning sample. Thus, efficient and effective learning can be performed even in an environment where learning data is insufficient. In addition, the performance of the recognizer is effectively improved by screening hard-to-identify unlabeled samples from the test environment and updating the generators with efficient and accurate labeling online both the generator and the recognizer improves. It is also possible to generate samples from the updated generator to suit the test environment.

This makes it possible to provide an online recognition apparatus and an online recognition method that can improve recognition accuracy even when the number of learning samples is insufficient.

### [Second Embodiment]

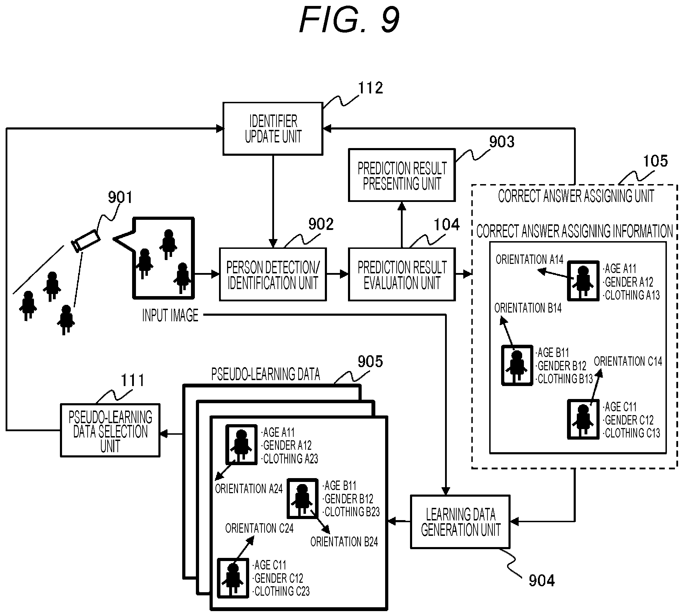

FIG. 9 is a functional block configuration diagram of the online recognition apparatus in this embodiment. In this embodiment, an example of detection of a person reflected on a camera and recognition of attributes will be described.

In FIG. 9, the same function as that of FIG. 1 is attached with the same symbol, and the description is omitted. In FIG. 9, a generator instruction variable generation unit inputs an input image captured from an imaging device 901 such as an infrared, stereo, or general visible light camera to a person detection/identification unit 902. The person detection/identification unit 902 is configured as the identifier feature amount extraction unit 102 and an identification result prediction unit 103 in FIG. 1. The person detection/identification unit 902 detects the position of a person appearing in the image, and identifies the related attribute. The person-related attributes include, for example, the detected person's age, gender, clothing, behavior, and orientation. The detected person position and attribute score are input to the prediction result evaluation unit 104, and the necessity of assigning a correct answer is determined. In addition, the prediction result is displayed on a prediction result presenting unit 903 as a reference. In a case where it is determined that the correct answer by the labeler is necessary, the input image is input to the correct answer assigning unit 105, and the position of the person reflected in the image is designated by the same processing as the correct answer assigning unit 105 in FIG. 1 as illustrated in FIG. 9 with a bold frame, and the attributes of the person is manually input from the labeler.

A learning data generation unit 904 generates pseudo-learning data using the attached correct answer information and the input image. The learning data generating unit 904 is configured as the generator update unit 107, the generator instruction variable generation unit 106, and the pseudo-learning data generation unit 108 in FIG. 1. In the generated data, different positions and attributes are generated for the same person as the pseudo-learning data illustrated in FIG. 9 and used as learning data. For example, from a person whose the age of the person in the input data is A11, the gender is A12, the clothing is A13, and the orientation is A14, and the bold frame, the position information of the person in the image is set a correct answer of the input data. Based on the correct answer information, the generated learning data has similar image characteristics to the person reflected in the input data, but generates a person with the age A11, the gender A12, the clothing A23, and the orientation A24. In addition, the person is generated so as to be at a different position in the same camera view range as the input image. The pseudo-learning data selection unit 111 performs a selection process from the generated data based on the reality of the generated pseudo-learning data, and uses the selected data for updating the identifier.

In a case where it is unnecessary to assign a correct answer by the labeler, the result from the person detection/identification unit 902 is assigned to the input image as correct answer information, and the identifier update unit 112 updates the identifier using the correct answer information and the input image. The updated identifier is used for detecting and discriminating the next input data.

Thereby, the attribute configuration and position information of the person not captured from the camera, and an image that the identifier cannot identify well is complemented by the generated pseudo-learning data, and more robust detection and recognition can be realized by updating the identifier using these data.

### [Third Embodiment]

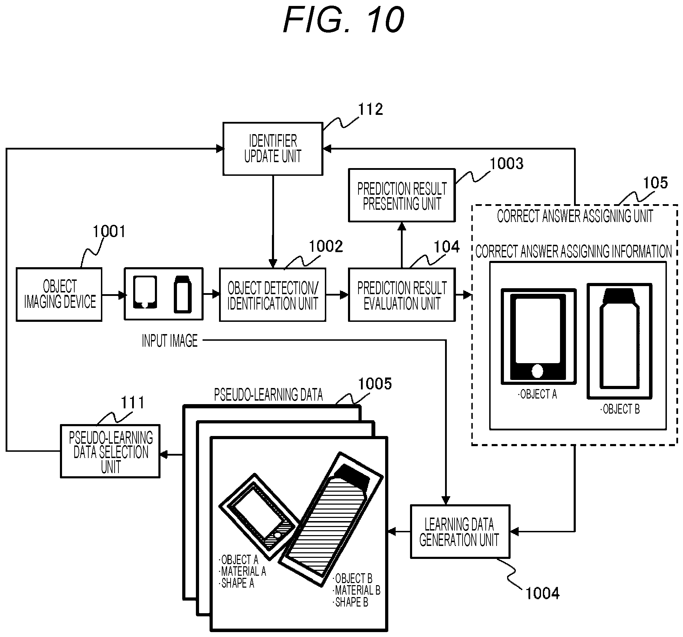

FIG. 10 is a functional block configuration diagram of the online recognition apparatus in this embodiment. In this embodiment, an example of detection of an object reflected on an imaging device and category recognition will be described.

In FIG. 10, the same function as that of FIG. 1 is attached with the same symbol, and the description is omitted. In FIG. 10, an object imaging device 1001 can be a visible camera, a stereo camera, an IR camera, a radiation (X-ray) irradiation device, or the like. An object detection/identification unit 1002 is configured as the identifier feature amount extraction unit 102 and an identification result prediction unit 103 in FIG. 1.

In addition, a learning data generating unit 1004 is configured as the generator update unit 107, the generator instruction variable generation unit 106, and the pseudo-learning data generation unit 108 in FIG. 1.

In FIG. 10, an object detection/identification unit 1002 detects the position of an object appearing in the image and identifies the category of the object. In a case where it is determined in the input data that it is necessary to assign a correct answer by the labeler, the prediction result evaluation unit 104 inputs the input data to the correct answer assigning unit 105, and assigns the position of the object and the category name from the labeler as the correct answer information.

Using the correct answer information and the input data from the correct answer assigning unit 105, the learning data generation unit 1004 generates an image having different materials, shapes, and positions in the image for objects of the same category. This is because, in FIG. 1, an object having information different from the real data is generated by the generator updated from the generator update unit that has been learned from the image of the same category in advance and the generation instruction variable from the generator instruction variable generation unit. The pseudo-learning data selection unit 111 performs selection on the generated pseudo-learning data, and the identifier update unit 112 updates the identifier using the selected learning data.

In addition, in a case where it is unnecessary to assign a correct answer by the labeler, the result from the object detection/identification unit 1002 is assigned to the input image as correct answer information, and the identifier update unit 112 updates the identifier using the correct answer information and the input image.

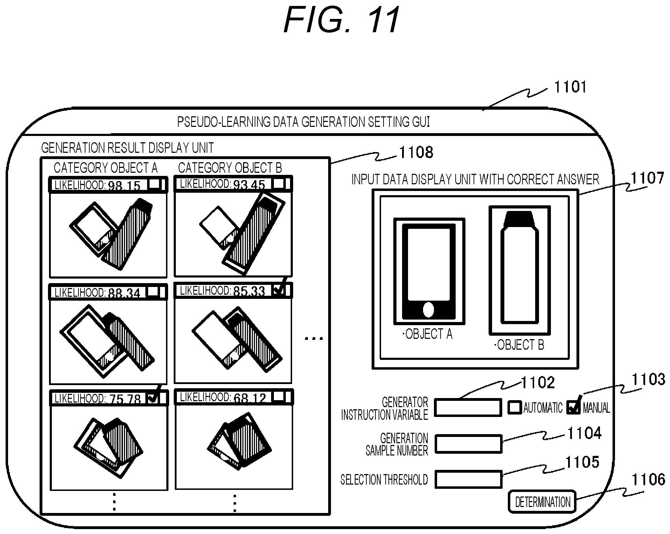

FIG. 11 is a pseudo-learning data generation setting Graphical User Interface (GUI) of the online recognition apparatus in this embodiment. The pseudo-learning data generation setting GUI is a diagram illustrating a setting method of a generation instruction variable and a generation sample number in the first embodiment, and a method of manually selecting pseudo-learning data in the pseudo-learning data selection unit 111.

In FIG. 11, the pseudo-learning data generation setting GUI is provided in an input window 1101. This GUI includes input boxes 1102, 1104, and 1105 in which generation instruction variable information, the number of generated samples, and the number of selected samples can be input. In addition, a check box 1103 is provided for automatically generating or manually setting a generation instruction variable. In addition, a determination button 1106 for reflecting the input value is provided, and by pressing this, the generation instruction variable and the number of generated samples are determined, and the generated image is displayed on a generation result display unit 1108. In the example of FIG. 11, in a case where the input data is an image having two objects, the drawing illustrates the pseudo-learning data generation setting GUI for a mobile phone and a water bottle. In addition, an input data display unit 1107 with a correct answer indicating the current input image and its correct answer information is provided.

The generation result display unit 1108 displays the results generated for each category in an order of the likelihood representing the reality of the image calculated at the time of generating the data by the pseudo-learning data generation unit 108 of the first embodiment. The pseudo-learning data input to the identifier update unit 112 in the first embodiment selects generated images listed in an order of likelihood up to a value set by a selection threshold. The threshold may be a likelihood or a number in the order of likelihood. In addition, in a case where the pseudo-learning data is selected manually to be updated to the identifier, an image which the check box displayed on the generation result display unit 1108 is checked is also used for learning. This example is an example, and the number of generation instruction variables that can be set may be increased or decreased as appropriate, or the current state may be displayed as texts instead of the input data display unit 1107 with a correct answer, or may be omitted. In addition, instead of the determination button 1106, a function of automatically transmitting the setting content at a certain timing may be provided. In addition, the pseudo-learning data generation setting is not limited to the method that can be freely input as in this example, and may be set by selecting from several candidates.

As described above, in this embodiment, the pseudo-learning data of the object reflected in the input image is generated and used for learning of the identifier, and the identifier can become more robust more quickly by updating the input data that cannot be detected online.

### Reference Signs List

- 101: input data
- 102: identifier feature amount extraction unit
- 103: identification result prediction unit
- 104: prediction result evaluation unit
- 105: correct answer assigning unit
- 106: generator instruction variable generation unit
- 107: generator update unit
- 108: pseudo-learning data generation unit
- 109: generation sample number setting unit
- 110: generation sample storage unit
- 111: pseudo-learning data selection unit
- 112: identifier update unit
- 201: uncertainty evaluation unit
- 202: information density calculation unit
- 203: average likelihood calculation unit
- 204: ensemble evaluation unit
- 501: data storage unit with correct answer
- 502: learning data
- 503: identifier feature amount extraction unit
- 504: identifier initialization unit
- 505: identifier storage unit
- 506: generator construction unit
- 507: generator storage unit
- 508: generator instruction variable generation unit
- 509: data generation unit
- 510: generated data storage unit
- 511: identifier reconstruction unit
- 512: identifier evaluation unit
- 801: input data collection device
- 802: arithmetic device
- 803: recording device
- 804: user interface
- 901: imaging device
- 902: person detection/identification unit
- 903: prediction result presenting unit
- 904: learning data generation unit
- 905: pseudo-learning data
- 1001: object imaging device
- 1002: object detection/identification unit
- 1003: prediction result presenting unit
- 1004: learning data generation unit
- 1005: pseudo-learning data
- 1101: input window
- 1102, 1104, 1105: input box
- 1103: checkbox
- 1106: determination button
- 1107: input data display unit with correct answer
- 1108: generation result display unit

## Claims

1. An online recognition apparatus for updating, comprising:
a feature amount extraction unit that extracts a feature amount of input data;
an identification result prediction unit that predicts an identification result based on the extracted feature amount;
a prediction result evaluation unit that determines necessity of labeling from the predicted identification result;
a correct answer assigning unit that assigns a correct answer to input data online from the determination result;
a generator update unit that updates a parameter of a generator based on input data with a correct answer;
a pseudo-learning data generation unit that establishes a generator based on the parameter of the updated generator and generates pseudo-learning data; and
an identifier update unit that online updates a parameter of an identifier prepared in advance based on the input data with the correct answer and the pseudo-learning data,
wherein the updated identifier is updated as a new identification result prediction unit.

2. The online recognition apparatus according to claim 1,
wherein the prediction result evaluation unit includes
an uncertainty evaluation unit that calculates uncertainty in recognition of an identification result received from the identification result prediction unit,
an information density calculation unit that calculates similarity between the identification result and a learning sample, and outputs an average of the information as information density information,
an average likelihood calculation unit that calculates a distance with respect to a predicted distribution of a recognizer from the identification result, and outputs a value of the distance as an average likelihood, and
an ensemble evaluation unit that calculates an evaluation condition from the uncertainty calculated by the uncertainty evaluation unit and performs an evaluation again based on the information density information and the average likelihood when the evaluation condition is satisfied.

3. The online recognition apparatus according to claim 1, further comprising:
an identification result presenting unit that presents the identification result predicted by the identification result prediction unit.

4. An online recognition method, comprising:
extracting a feature amount of input data;
predicting an identification result based on the extracted feature amount;
determining necessity of labeling from the predicted identification result unit;
assigning a correct answer to input data online from the determination result;
updating a parameter of a generator based on input data with a correct answer;
constructing a generator based on the parameter of the updated generator and generates pseudo-learning data;
online updating a parameter of an identifier prepared in advance based on the input data with the correct answer and the pseudo-learning data; and
predicting a new identification result by the updated identifier.

5. The online recognition method according to claim 4,
wherein, the determining of the necessity of the labeling from the predicted identification result,
uncertainty of the predicted identification result is calculated,
similarity between the predicted identification result and a learning sample is calculated, and an average is calculated as information density information,
a distance to a predicted distribution of a recognizer is calculated from the predicted identification result, and a value of the distance is calculated as an average likelihood, and
an evaluation condition is calculated from the uncertainty, and when the evaluation condition is satisfied, the necessity of the labeling is determined again based on the information density information and the average likelihood.

6. The online recognition method according to claim 4, further comprising:
presenting the predicted identification result.

7. A setting screen of a line recognition device that updates a parameter of a generator based on input data with a correct answer, constructs a generator based on the updated parameter of the generator, and generates pseudo-learning data, comprising:
an input data display unit with a correct answer which indicates input data and correct answer information thereof, and
a generation result display unit that displays the generated pseudo-learning data.
